# EUROPÄISCHE PATENTSCHRIFT

(11) **EP 0 625 836 B1**
(45) Veröffentlichungstag und Bekanntmachung des Hinweises auf die Patenterteilung: **16.08.2001**
(21) Anmeldenummer: 94106997.3
(22) Anmeldetag: 04.05.1994
(51) Int. Cl.: H04J 3/08

(54) **Verfahren und Anordnung zum Abzweigen und Einfügen von Digitalsignalen**
Method and device for branching and inserting digital signals
Méthode et dispositif de dérivation et d'insertion de signaux numériques

(30) Priorität: 17.05.1993 DE 4316493
(43) Veröffentlichungstag der Anmeldung: 23.11.1994
(73) Patentinhaber: SIEMENS AKTIENGESELLSCHAFT, 80333 München (DE)
(72) Erfinder: Rogasch, Volker, Dipl.-Ing., D-17491 Greifswald (DE); Otto, Hans-Dietrich, Dipl.-Phys., D-17489 Greifswald (DE)

(56) Entgegenhaltungen:
- EP-A- 0 214 783

## Beschreibung

Die Erfindung betrifft ein Verfahren zum Abzweigen und Einfügen von Digitalsignalen nach dem Oberbegriff des Patentanspruchs 1 und einen Abzweigmultiplexer nach dem Oberbegriff des Anspruchs 4, wie aus EP-A-214783 schon bekannt.

Die Grundstrukturen der PCM-Systeme sind in den CCITT-Empfehlungen festgelegt, z.B. ist in den CCITT-Empfehlungen G.704 die Grundstruktur der PCM-30-Systeme beschrieben.

Einzelne Teilnehmeranschlüsse ließen sich bisher nur mit hohen Schaltungsaufwand an diese Systeme anbinden. Auch die Realisierung von nicht öffentlichen Nachrichtennetzen mit häufigem Abzweigen und Einfügen von einzelnen Kanälen oder Kanalgruppen war bisher sehr aufwendig.

In der Broschüre "Digitalsignal-Abzweiggerät AZG 64 K/2F, Bestell-Nr. S42023-A758-A1-2-29 ist eine kostengünstige Lösung für dieses Problem angegeben.

Dieses Digitalsignal-Abzweiggerät gestattet allerdings nur die Abzweigung bzw. das Einfügen von bis zu 12 Kanälen.

Aufgabe der Erfindung ist es, ein Verfahren zum Abzweigen und Einfügen von Digitalsignalen anzugeben, das bei geringem Schaltungsaufwand das Abzweigen und Einfügen aller Kanäle in beiden Richtungen ermöglicht. Außerdem ist als Anordnung ein geeigneter Abzweigmultiplexer anzugeben.

Die Aufgabe wird durch ein erfindungsgemäßes Verfahren nach Anspruch 1 gelöst. In dem unabhängigem Anspruch 4 ist ein geeigneter Abzweigmultiplexer angegeben.

Vorteilhafte Weiterbildungen der Erfindung sind in den Unteransprüchen angegeben.

Der besondere Vorteil der Erfindung liegt in dem geringen Schaltungsaufwand. Durch die Verdoppelung der Datenraten können sämtliche empfangene Daten über einen Bus (Highway) an die Anschlußbaugruppen (Kanalbaugruppen) geführt werden und von den Anschlußbaugruppen über einen weiteren Bus den Selektionseinrichtungen und Interfaceschaltungen zugeführt werden. Über eine Steuerung können die Digitalsignale der gewünschten Kanäle ebenso leicht abgezweigt wie eingefügt werden.

Vorteilhaft ist ebenso die zentrale Steuerung der Anschlußbaugruppen, die ein hohes Maß an Flexibiltät ermöglicht.

Bei einer vorteilhaften Variante der Anordnung werden anstelle von Multiplexern Verknüpfungsglieder eingesetzt.

Die Erfindung wird anhand von Ausführungsbeispielen und Zeitdiagrammen näher erläutert.

Es zeigen:
- Fig. 1: ein Prinzipschaltbild des Abzweigmultiplexers
- Fig. 2: ein zugehöriges Zeitdiagramm,
- Fig. 3: eine Variante des Abzweigmultiplexers und
- Fig. 4: ein zugehöriges Zeitdiagramm.

Die Erfindung soll anhand des PCM-30-Systems erläutert werden.

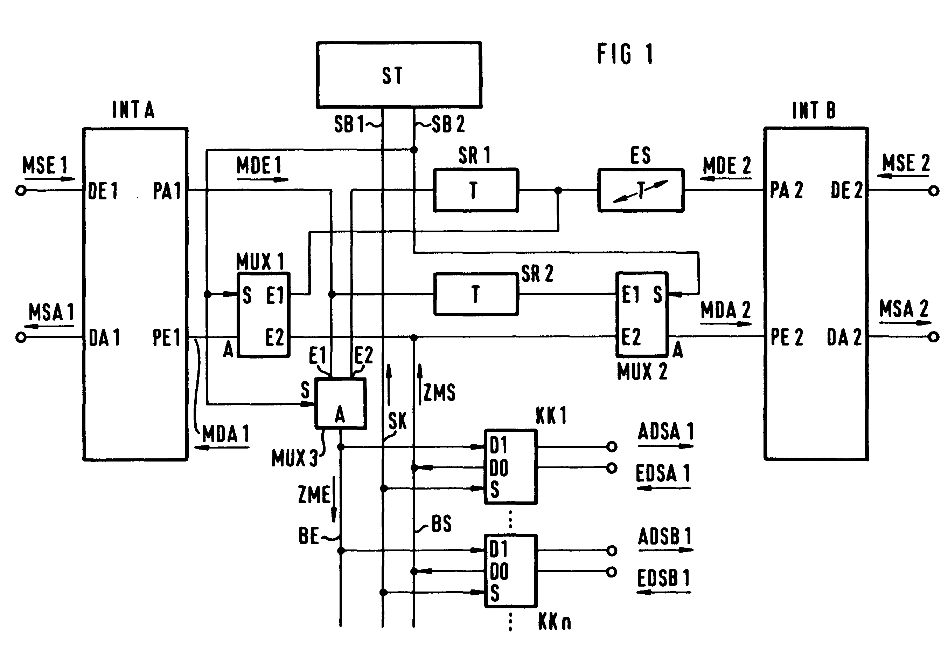

Der in Figur 1 dargestellte Abzweigmultiplexer enthält ein erstes Interface INTA, dessen Dateneingang DE1 ein erstes Multiplexsignal MSE1 zugeführt wird. An seinem übertragungsseitigen Datenausgang DA1 wird ein entsprechendes Multiplexsignal MSA1 ausgesendet. Das Interface weist geräteseitig einen Ausgangsport PA1 und einen Eingangsport PE1 auf.

Der Abzweigmultiplexer enthält noch ein gleiches zweites Interface INTB, dessen Dateneingang DE2 ein zweites Multiplexsignal MSE2 zugeführt wird. An seinem Datenausgang DA2 wird ein entsprechendes Multiplexsignal MSA2 abgegeben. Die dem ersten Interface entsprechenden Datenports sind mit PA2 und PE2 bezeichnet.

Der Ausgangsport PA1 ist direkt mit einem Eingang E1 eines dritten Multiplexers MUX3 und über ein zweites Laufzeitglied (Schieberegister) SR2 mit dem Eingang E1 eines zweiten Multiplexers MUX2 verbunden. Der Ausgangsport PA2 ist über eine steuerbare Laufzeiteinrichtung, einen elastischen Speicher ES, mit dem ersten Eingang E1 eines ersten Multiplexers MUX1 und über ein dem elastischen Speicher nachgeschaltetes erstes Laufzeitglied (Schieberegister) SR1 mit einem zweiten Eingang E2 des dritten Multiplexers MUX3 verbunden. An den Ausgang des dritten Multiplexers ist ein Empfangsbus BE angeschaltet, an den sämtliche Anschlußbaugruppen, hier Kanalbaugruppen, KK1...KKn, maximal KK60, mit ihren Dateneingängen DI angeschaltet sind. Die Datenausgänge DO der Kanalbaugruppen sind mit einem Sendebus BS verbunden, der an einen zweiten Eingang E2 des ersten Multiplexers MUX1 und einen zweiten Eingang E2 des zweiten Multiplexers MUX2 geführt ist. Außerdem ist eine Steuerung ST vorgesehen, die über einen Steuerbus SB1 die Kanalbaugruppen KK1 - KKn steuert und über einen zweiten Steuerbus SB2 die Multiplexer MUX steuert. Die Steuereingänge sind mit S bezeichnet, Ausgänge mit A.

Die empfangenen Multiplexsignale MSE1 und MSE2 werden durch das jeweilige Interface wortweise in transformierte Multiplexsignale MDE1 und MDE2 umgesetzt, die die doppelte Datenrate, d.h. doppelter Bitrate und entsprechende Lücken (oder die doppelte Datenwortrate mit Lücken) aufweisen. Die vom Interface INTA abgegebenen transformierten Multiplexsignale MDE1 werden dem Eingang E1 des dritten Multiplexers MUX3 zugeführt. Die entsprechenden transformierten Multiplexsignale MDE2 des zweiten Interface INTB werden über einen elastischen Speicher ES geführt, dessen Laufzeit durch eine hier nicht dargestellte Rahmensynchronisierung derart gesteuert wird, daß der Rahmenbeginn und damit die einzelnen Zeitschlitze (Kanäle) beider Multiplexsignale übereinstimmen. Dieses Signal wird nochmals durch das erste Schieberegister SR1 um ein Byte verzögert, so daß nun die einzelnen einander entsprechenden Zeitschlitze/Kanäle der transformierten Multiplexsignale um ein Byte verzögert an den Eingängen E1 und E2 des dritten Multiplexers MUX3 in ungeradzahligen bzw. geradzahligen Buszeitlagen (auf die noch genau eingegangen wird) anliegen. An seinem Ausgang liegt somit ein aus den transformierten Multiplexsignalen MDE1 und MDE2 zusammengesetzes Multiplexsignal ZME an.

Soll das erste Multiplexsignal MSE1 vollständig durchgeschaltet werden, so wird das transformierte Multiplexsignal MDE1 über das zweite Schieberegister SR2 und den zweiten Multiplexer MUX2 an den Eingangport PE2 des zweiten Interface INTB durchgeschaltet. Das Signal wird dann erneut in ein normgerechtes Multiplexsignal MSA2 umgesetzt, das dem empfangenen ersten Multiplexsignal MSE1 entspricht. In derselben Weise wird das zweite Multiplexsignal MSE2 über den elastischen Speicher ES, den ersten Multiplexer MUX1 und den Eingangsport PA2 dem ersten Interface INTA zugeführt und als Multiplexsignal MSA1 durchgeschaltet.

Beim Abzweigen der Digitalsignale einzelner Kanäle KA1, ... des Multiplexsignals MSE1 und KB1,...des Multiplexsignals MSE2 werden die zugeordneten Digitalsignale DSA1, DSB1, ... über den Empfangsbus BE den Kanalbaugruppen zugeführt und als abgezweigte Digitalsignale ADSA1, ... und ADSB1 (hier mit 64 kbit/s) abgegeben. Die Kanalbaugruppen senden ihrerseits in diesen Kanälen Digitalsignale EDSA1, EDSB1,...aus, die in ungeradzahligen Buszeitlagen über den ersten Multiplexer MUX1 in den vom zweiten Interface INT2 kommende Multiplexsignal MSE2 bzw MDE2 eingefügt werden, oder in geradzahligen Buszeitlagen über den zweiten Multiplexer MUX2 in das vom ersten Interface INTA kommende Multiplexsignal MSE1 bzw. MDE1 eingefügt werden.

Der Abzweigmultiplexer gestattet somit sogar das Abzweigen und Einfügen aller Kanäle.

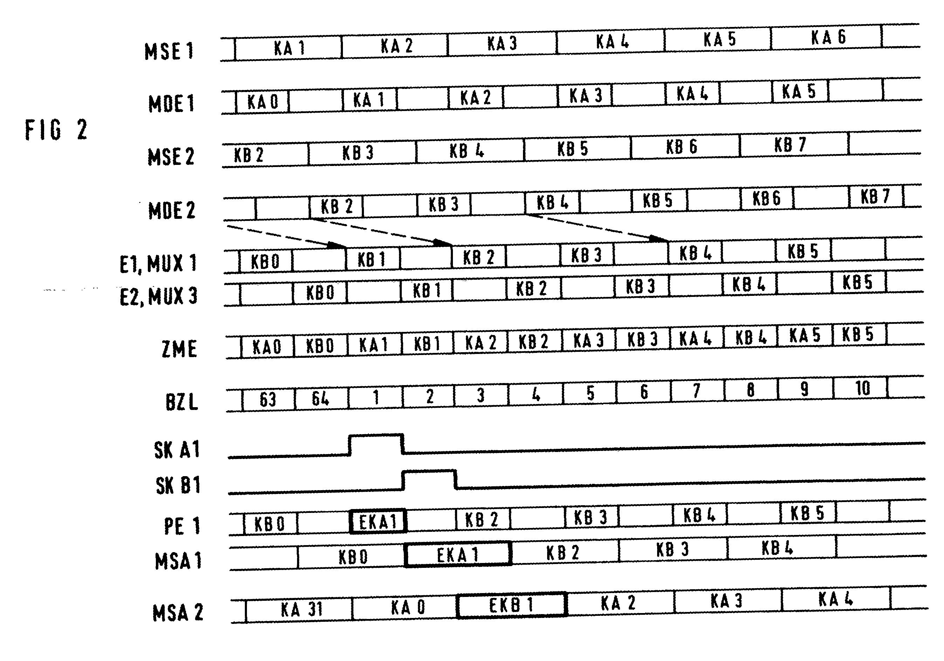

In Figur 2 ist ein entsprechendes Zeitdiagramm zur Verdeutlichung der Vorgänge dargestellt. Die oberen vier Zeilen stellen die Transformation der empfangenen Multiplexsignale MSE1 (Kanäle KA1, KA2 ...) und MSE2 (Kanäle KB1, KB2, ...) in transformierte Multiplexsignale MDE1 und MDE2 dar. Durch den elastischen Speicher ES und das erste Schieberegister SR1 werden die Datenwörter und Lücken an den Eingängen des dritten Multiplexers MUX3 zeitgerecht angeliefert und als Multiplexsignal ZME auf dem Empfangsbus BE zusammengefaßt. In dem dargestellten Beispiel soll das vom Interface INTA kommende im ersten Kanal KA1 übertragene Digitalsignal DSA1 abgezweigt werden, d.h. über eine Kanalbaugruppe KK1 als ADSA1 ausgegeben werden und ein entsprechendes Digitalsignal EDSA1 eingefügt und über das Interface INTA ausgegeben werden. Hierzu wird von der Steuerung ST ein Steuersignal SKA1 ausgegeben, das über einen Steuereingang S der Kanalbaugruppe KK1 sowohl die zeitgerechte Übernahme der auf dem Empfangsbus BE übertragenen Empfangsdaten als auch das zeitgerechte wortweise Einfügen des von ihr ausgesendeten Digitalsignals EDSA1 über den ersten Multiplexer MUX1 veranlaßt. Dies erfolgt im "Einfügungskanal" EKA1. Da folglich das vom Interface INTB im Kanal KB1 gelieferte Digitalsignal DSB1 nicht mehr über das erste Interface INTA übertragen werden kann, besteht die Möglichkeit, durch das Steuersignal SKB1 veranlaßt das entsprechende Digitalsignal des Kanals KB1 des Interfaces INTB abzuzweigen und ein Digitalsignal EDSB1 in den "Einfügungskanal" EKB1 einzufügen.

Die Digitalsignale DSA1, DSA2, .. des empfangenen Multiplexsignals MSE1 - die jeweils Datenkanälen KA1, KA2, .., .. zugeordnet sind - werden in ungeradzahligen Buszeitlagen BZL 1, 3, 5, ... die Digitalsignale DSB1, DSB2, ... des zweiten Multiplexsignals MSE2 in geradzahligen Basiszeitlagen BZL 0, 2, 4, ...des zusammengesetzten Multiplexsignals ZME auf dem Empfangsbus BE übertragen. Es ist hierbei natürlich auch möglich, nur die abgezweigten Digitalsignale auf den Empfangsbus BE durchzuschalten, um durch einen klareren Signalverlauf die Prüfung zu erleichtern.

In derselben Weise werden die von den Kanalbaugruppen gesendeten einzufügenden Digitalsignale EDSA1, ... in einer ungeraden Busbandlage des zusammengesetzten Multiplexsignals ZMS übertragen, wenn sie über das erste Interface INTA ausgesendet werden und in einer geraden Basiszeitlage BLZ 2, 4, ..., wenn sie über das zweite Interface INTB ausgesendet werden.

Die relevanten Digitalsignale an den Eingängen der Multiplexer MUX1 und MUX2 müssen dagegen immer dieselben (beliebigen) Buszeitlagen aufweisen, da nur jeweils ein Datenwort ausgewählt wird und die in den "Lücken" auftretenden Daten ignoriert werden.

In Figur 2 sind anstelle der Digitalsignale jeweils der zugehörigen Kanäle/Zeitschlitze angegeben.

Die Wahl der Buszeitlagen ist willkürlich festgelegt, ebenso können das Interface INTA mit dem zweiten Interface INTB vertauscht werden.

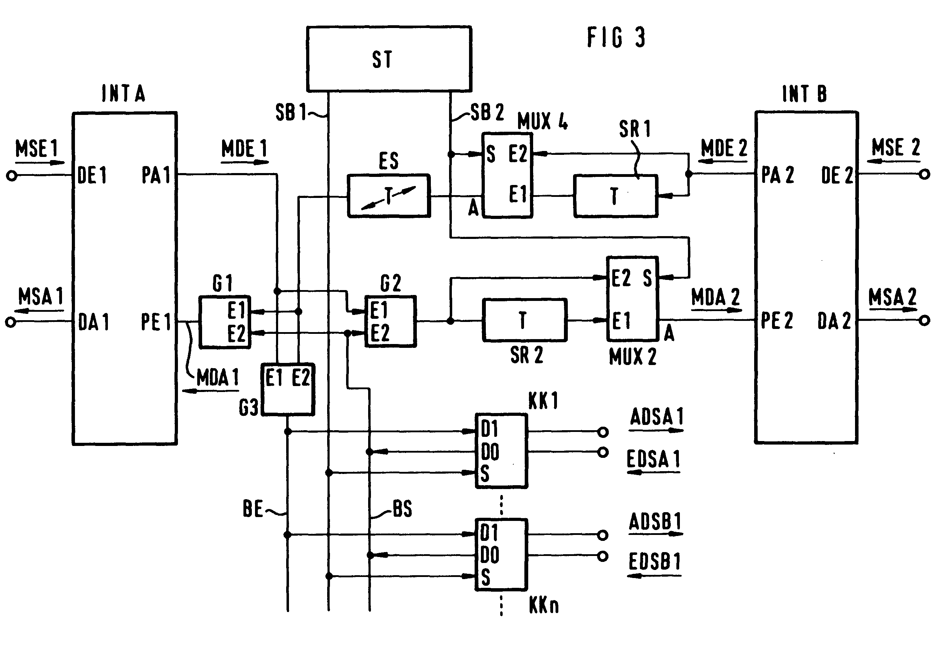

In Figur 3 ist eine Variante der Schaltungsanordnung dargestellt. Die Multiplexer MUX1 und MUX3 sind durch Gatterschaltungen G1, G3 (UND, ODER, EX-OR) ersetzt. Die Reihenfolge des elastischen Speichers ES und des ersten Laufzeitgliedes SR1 ist vertauscht, und ein vierter Multiplexer MUX4 ist zwischen diesen Schaltungen eingeschaltet.

Da in den Lücken zwischen den Datenwörtern des transformierten Multiplexsignals Dauerlagen, z.B. log. Eins, übertragen werden, kann die Multiplexerfunktion durch zeitliches Verschieben der Multiplexsignale nachgeahmt werden. Dies ist lediglich für den Signalweg eines ankommenden transformierten Multiplexsignals (hier MDE2) erforderlich. Soll nun das Digitalsignal eines Kanals des zweiten Multiplexsignals MSE2 abgezweigt werden, so wird es durch Einschalten des Schieberegisters SR1 in die geradzahlige Buszeitlage BZL2 gebracht. Ein Steuerkriterium S4 für den Multiplexer MUX4 ist entsprechend verlängert. Über das Gatter G3 wird somit der abzuzweigende Kanal KB1 auf den Empfangsbus BE durchgeschaltet und ebenso das Digitalsignal des ersten Kanals KA1. Während der restlichen Zeiten herrscht abwechselnd eine Dauerlage oder eine nicht ausgewertete Mischung der Digitalsignale der weiteren Kanäle KA und KB auf dem Empfangsbus.

Das Einfügen geht in der bereits beschriebenen Weise vor sich. Das Gatter G2 ist lediglich erforderlich, um nicht dargestellten Schaltungen sämtliche einzufügenden Digitalsignale zuzuführen.

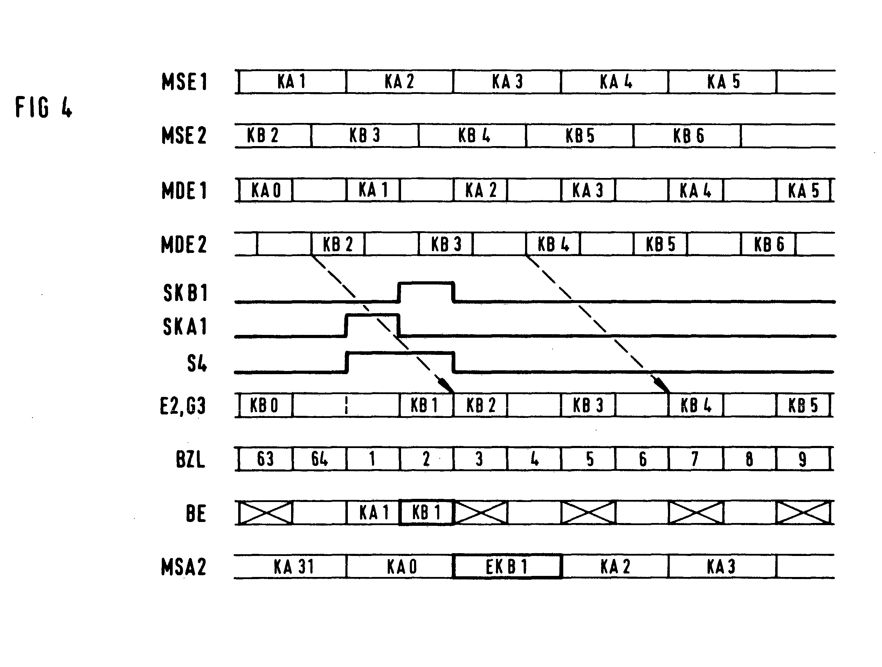

Das in Figur 4 dargestellte Zeitdiagramm zeigt wiederum das Abzweigen und Einfügen der Digitalsignale der ersten Kanäle KA1 und KB1.

Die ersten vier Zeilen zeigen wieder die Transformation der Multiplexsignale. Am eingang E1 des ersten Gatters G1 und am zweiten Eingang E2 des dritten Gatters G3 liegen die transformierten Multiplexsignale MDE2 in ungeradzahligen Buszeitlagen an.

Das Steuersignal S4 schaltet über den weiteren Multiplexer MUX4 das erste Schieberegister (SR1) in den Signalweg des zweiten transformierten Multiplexsignals MDE2 ein. Hierdurch gelangt eine Dauerlage an den Eingang E1 des ersten Gatters G1 und den Eingang E2 des dritten Gatters G3. Hierdurch kann das einzufügende Digitalsignal EDSA1 über das erste Gatter G1 und das erste Interface INTA ausgesendet werden und das abgezweigte Digitalsignal ADSA1 des ersten Kanals KA1 auf den Empfangsbus zu der Kanalbaugruppe KK1 gelangen. Anschließend wird während einer Lücke (Dauerlage) des transformierten Multiplexsignals MDE1 das abzuzweigende Digitalsignal des Kanals KB1 über das Gatter G3 auf den Empfangsbus BE geschaltet und zur entsprechenden Kanalbaugruppe übertragen, die ein entsprechendes Digitalsignal EDSB1 dieses Kanals in der geradzahligen Buszeitlage BZL 2 aussendet, das über den zweiten Multiplexer MUX2 in das auzusendende transformierte Multiplexsignal MDA2 eingefügt, zum zweiten Interface INTB übertragen und ausgesendet wird.

Bei Abzweigmultiplexern höherer Ordnung wird das Verfahren sinngemäß durchgeführt.

## Patentansprüche

1. Verfahren zum Abzweigen und Einfügen von Digitalsignalen (DSA1, ... DSB1), die in Kanäle eines Multiplexsignals (MSE1, MSA1; MSE2, MSA2) übertragen werden,
**dadurch gekennzeichnet,**
daß die ankommenden Multiplexsignale (MSE1, MSE2) wortweise in transformierte Multiplexsignale (MDE1, MDE2) umgesetzt werden, bei denen jeweils Datenwörtern mit verdoppelter Bitrate gleichlange Lücken folgen,
daß ein transformiertes Multiplexsignal (MDE2) durch eine steuerbare Laufzeiteinrichtung (ES) auf das andere transformiterte Multiplexsignal (MDE1) synchronisiert wird,
daß die abzuzweigenden Digitalsignale (DSA1, DSB1...) der zugehörigen Kanäle (KA1, KB1,...) jedes transformierten Multiplexsignals (MDE1, MDE2) einer ungeradzahligen oder einer geradzahligen Buszeitlage (BZL) zugeordnet werden und zu einem Zeitmultiplexsignal (ZME) zusammengefaßt allen Anschlußbaugruppen (KK1...KKn) zugeführt werden,
daß die von den Anschlußbaugruppen (KK1...KKn) auszusenden Digitalsignalen (EDSA1, EDSB1...) für beide Übertragungsrichtungen gleichermaßen zu einem Zeitmultiplexsignal (ZMS) zusammengefaßt werden,
daß jeweils ein einzufügendes Digitalsignal (EDSA1) in den zugehörigen Datenkanal (KA1) eines transformierten Multiplexsignals (MDA1) eingefügt und in ein normgerechtes Multiplexsignal (MSA1) umgesetzt wird.

2. Verfahren nach Anspruch 1,
**dadurch gekennzeichnet,**
daß die abzuzweigenden Digitalsignale (ASA1, ADSB1) an die Anschlußbaugruppen (KK1, ...KKn) durchgeschaltet werden und
daß diese Steuersignale (SKA1, SKB1) erhalten.

3. Verfahren nach Anspruch 1,
**dadurch gekennzeichnet**,
daß die transformierten Multiplexsignale (MDE1, MDE2; MDA1, MDA2) seriell oder byteparallel übertragen werden.

4. Abzweigmultiplexer zum Abzweigen und Einfügen von Digitalsignalen, die in Kanälen (KA1, ...KB1,...) von Multiplexsignalen (MSE1, MSE2, MSA1, MSA2) übertragen werden,
**dadurch gekennzeichnet**,
daß ein erstes Interface (INTA) vorgesehen ist mit einem ersten Dateneingang (DE1), dem ein erstes ankommendes Multiplexsignal (MSE1) zugeführt wird,
mit einem ersten Ausgangsport (PA1), an dem ein transformiertes Multiplexsignal (MDE1) abgegeben wird, dessen Datenwörter die doppelte Datenrate aufweisen und durch gleichlange Lücken getrennt sind, mit einem Eingangsport (PE1), dem ein gleich strukturiertes transformiertes Multiplexsignal (MSA1) zugeführt wird und einem ersten Datenausgang (DA1), an dem ein erstes abgehendes Multiplexsignal (MSA1) ausgesendet wird, daß ein zweites gleiches Interface (INTB) vorgesehen ist, mit einem Dateneingang (DE2) dem ein zweites Multiplexsignal (MSE2) zugeführt wird, mit einem Ausgangsport (PA2) an dem ein transformiertes zweites Mutliplexsignal (MDE2) abgegeben wird, mit einem Eingangsport (PE2), dem ein transformiertes zweites Multiplexsignal (MDA2) zugeführt wird und mit einem Datenausgang (DA2), an dem ein zweites Multiplexsignal (MSA2) ausgesendet wird,
daß ein elastischer Speicher (ES) vorgesehen ist, der zwischen dem Ausgangsport (PA2) des zweiten Interface (INTB) und einem dem Eingangsport (PE1) des ersten Interface (INTA) vorgeschaltetem ersten Multiplexer (MUX1) eingeschaltet ist,
daß die Ausgangsports (PA1, PA2) beider Interfaces (INTA, INTB) direkt oder über den elastischen Speicher (ES) auf einen dritten Multiplexer (MUX3) geführt sind, an dessen Ausgang ein Empfangsbus (BE) liegt, an den die Dateneingänge (DI) von Anschlußbaugruppen (KK1...KKn) angeschaltet sind, daß ein Sendebus (BS) vorgesehen ist, an den die Datenaugänge (DO) der Anschlußbaugruppen (KK1...KKn) angeschaltet sind,
daß ein zweiter Multiplexer (MUX2) vorgesehen ist, an dessen Eingänge (E1, E2) der Ausgangsport (PA1) des ersten Interface (INTA) und der Sendebus (BS) geführt sind,
daß Laufzeitglieder (SR2, SR1) jeweils einem Eingang (E1, E2) des zweiten und des dritten Multiplexers (MUX2, MUX3) vorgeschaltet sind und
daß eine Steuerung (ST) vorgesehen ist, deren Steuerbusse (SB2, SB1) an die Multiplexer (MUX1, MUX2, MUX3) und die Anschlußbaugruppen (KK1...KKn) geführt sind.

5. Abzweigmultiplexer nach Anspruch 3
**dadurch gekennzeichnet,**
daß der erste Multiplexer (MUX1) und der dritte Multiplexer (MUX3) als Gatter (G1, G3) ausgebildet sind und
daß ein weiterer Multiplexer (MUX4), mit dem das erste Laufzeitglied (SR1) eingeschaltet oder unterdrückt wird in den Signalweg zwischen einem Ausgangsport (PA2) und den Eingängen (E1, E2) der Gatter (G1, G3) eingeschaltet ist.

6. Abzweigmultiplexer nach Anspruch 3 oder 4,
**dadurch gekennzeichnet,**
daß der Empfangsbus (BE) und der Sendebus (BS) jeweils als serieller Datenbus oder als paralleler Datenbus ausgeführt ist.

## Claims

1. Method for branching off and inserting digital signals (DSA1, ... DSB1) transmitted in channels of a multiplex signal (MSE1, MSA1; MSE2, MSA2),
characterized
in that the incoming multiplex signals (MSE1, MSE2) are converted, word by word, into transformed multiplex signals (MDE1, MDE2) in which data words having twice the bit rate are respectively followed by gaps of equal length,
in that one transformed multiplex signal (MDE2) is synchronized to the other transformed multiplex signal (MDE1) by a controllable delay device (ES),
in that the digital signals (DSA1, DSB1 ...) which are to be branched off from the associated channels (KA1, KB1, ...) of each transformed multiplex signal (MDE1, MDE2) are allocated an uneven or an even bus time slot (BZL), and, having been combined to form a time-division multiplex signal (ZME), are supplied to all the line modules (KK1 ... KKn),
in that the digital signals (EDSA1, EDSB1 ...) which are to be transmitted by the line modules (KK1 ... KKn) are combined, to the same extent for both transmission directions, to form a time-division multiplex signal (ZMS),
in that a digital signal (EDSA1) which is to be inserted is respectively inserted into the associated data channel (KA1) of a transformed multiplex signal (MDA1) and converted into a multiplex signal (MSA1) which conforms to standard.

2. Method according to Claim 1,
characterized
in that the digital signals (ADSA1, ADSB1) which are to be branched off are switched through to the line modules (KK1, ... KKn), and
in that said line modules receive control signals (SKA1, SKB1).

3. Method according to Claim 1,
characterized
in that the transformed multiplex signals (MDE1, MDE2; MDA1, MDA2) are transmitted in series or byte by byte in parallel.

4. Branching multiplexer for branching off and inserting digital signals transmitted in channels (KA1, ... KB1, ...) of multiplex signals (MSE1, MSE2, MSA1, MSA2),
characterized
in that a first interface (INTA) is provided, having a first data input (DE1), to which a first incoming multiplex signal (MSE1) is supplied,
having a first output port (PA1), at which a transformed multiplex signal (MDE1) is output whose data words have twice the data rate and are separated by gaps of equal length, having an input port (PE1) to which a transformed multiplex signal (MDA1) with the same structure is supplied, and a first data output (DA1), at which a first outgoing multiplex signal (MSA1) is transmitted,
in that a second, identical interface (INTB) is provided, having a data input (DE2) to which a second multiplex signal (MSE2) is supplied, having an output port (PA2) at which a transformed second multiplex signal (MDE2) is output, having an input port (PE2) to which a transformed second multiplex signal (MDA2) is supplied, and having a data output (DA2) at which a second multiplex signal (MSA2) is transmitted,
in that an elastic memory (ES) is provided which is connected between the output port (PA2) of the second interface (INTB) and a first multiplexer (MUX1), connected upstream of the input port (PE1) of the first interface (INTA),
in that the output ports (PA1, PA2) of the two interfaces (INTA, INTB) are connected directly or via the elastic memory (ES) to a third multiplexer (MUX3), at whose output there is a reception bus (BE) to which the data inputs (DI) of line modules (KK1 ... KKn) are connected,
in that a transmission bus (BS) is provided to which the data outputs (DO) of the line modules (KK1 ... KKn) are connected,
in that a second multiplexer (MUX2) is provided, to whose inputs (E1, E2) the output port (PA1) of the first interface (INTA) and the transmission bus (BS) are connected,
in that delay elements (SR2, SR1) are connected upstream of a respective input (E1, E2) of the second and third multiplexers (MUX2, MUX3), and
in that a controller (ST) is provided whose control buses (SB2, SB1) are connected to the multiplexers (MUX1, MUX2, MUX3) and to the line modules (KK1 ... KKn).

5. Branching multiplexer according to Claim 4,
characterized
in that the first multiplexer (MUX1) and the third multiplexer (MUX3) are in the form of gates (G1, G3), and
in that a further multiplexer (MUX4), which is used to turn on or suppress the first delay element (SR1), is connected in the signal path between an output port (PA2) and the inputs (E1, E2) of the gates (G1, G3).

6. Branching multiplexer according to Claim 4,
characterized
in that the reception bus (BE) and the transmission bus (BS) are each in the form of a serial data bus or of a parallel data bus.

## Revendications

1. Procédé pour dériver et insérer des signaux (DSA1, ... DSB1) numériques qui sont transmis dans des voies d'un signal (MSE1, MSA1 ; MES2, MSA2) multiplex,
caractérisé
en ce que les signaux (MES1, MES2) multiplex arrivant sont convertis par mots en signaux (MDE1, MDE2) multiplex transformés pour lesquels des arrêts de même longueur suivent respectivement des mots de données ayant un débit binaire double,
en ce qu'un signal (MDE2) multiplex transformé est synchronisé par un dispositif (ES) de temporisation pouvant être commandé sur l'autre signal (MDE1) multiplex transformé,
en ce que les signaux (DSA1, DSB1...) à dériver des voies (KA1, KB1, ...) associées de chaque signal (MDE1, MDE2) multiplex sont associés à une position (BZL) temporelle de bus paire ou à une position (BZL) temporelle de bus impaire et envoyés à tous les modules (KK1 ... KKn) de raccordement en étant réunis en un signal (ZME) de multiplexage temporel,
en ce que les signaux (EDSA1, EDSB1) numériques à émettre des modules (KK1 ... KKn) de raccordement sont réunis pour les deux directions de transmission pareillement en un signal (ZMS) de multiplexage temporel,
en ce que respectivement un signal (EDSA1) numérique à insérer est inséré dans la voie (KA1) de données associées d'un signal (MDA1) multiplex transformé et converti en un signal (MSA1) multiplex conforme à la norme.

2. Procédé suivant la revendication 1, caractérisé en ce que les signaux (ASA1, ADSB1) numériques à dériver sont envoyés aux modules (KK1, ... KKn) de raccordement et en ce que ces modules reçoivent des signaux (SKA1, SKB1) de commande.

3. Procédé suivant la revendication 1, caractérisé en ce que les signaux (MDE1, MDE2 ; MDA1, MDA2) multiplex transformés sont transmis en série ou en octets parallèles.

4. Multiplexeur de dérivation pour dériver et insérer des signaux numériques qui sont transmis dans des voies (KA1, ... KB1...). de signaux (MSE1, MSE2, MSA1, MSA2) multiplex,
caractérisé
en ce qu'il est prévu une première interface (INTA), comportant une première entrée (DE1) de données à laquelle un premier signal (MSE1) multiplex arrivant est envoyé,
comportant un premier port (PA1) de sortie auquel est fourni un signal (MDE1) multiplex transformé dont les mots de données ont un débit binaire deux fois plus grand et sont séparés par des arrêts de même longueur, comportant un port (PE1) d'entrée auquel un signal (MSA1) multiplex transformé et structuré de manière identique est envoyé, et une première sortie (DA1) de données à laquelle un premier signal (MSA1) multiplex partant est envoyé,
en ce qu'il est prévu une deuxième interface (INTB) identique comportant une entrée (DE2) de données à laquelle un deuxième signal (MSE2) multiplex est envoyé, comportant un port (PA2) de sortie auquel un deuxième signal (MDE2) multiplex transformé est fourni, comportant un port (PE2) d'entrée auquel un deuxième signal (MDA2) multiplex transformé est envoyé et comportant une sortie (DA2) de données sur laquelle un deuxième signal (MSA2) multiplex est émis,
en ce qu'il est prévu une mémoire (ES) élastique qui est branchée entre le port (PA2) de sortie de la deuxième interface (INTB) et un premier multiplexeur (MUX1) monté en aval du port (PE1) d'entrée de la première interface (INTA),
en ce que les ports (PA1, PA2) de sortie des deux interfaces (INTA, INTB) sont guidés directement ou par l'intermédiaire de la mémoire (ES) élastique à un troisième multiplexeur (MUX3) à la sortie duquel se trouve un bus de réception auquel les entrées (DI) de données de modules (KK1 ... KKn) de raccordement sont raccordées,
en ce qu'il est prévu un bus (BS) d'émission auquel les sorties (DO) de données des modules (KK1 ... KKn) de raccordement sont raccordées,
en ce qu'il est prévu un deuxième multiplexeur (MUX2) aux entrées (E1, E2) duquel le port (PA1) de sortie de la première interface (INTA) et le bus (BS) d'émission sont guidées,
en ce que des éléments (SR2, SR1) de temporisation sont prévus respectivement en amont d'une entrée (E1, E2) du deuxième et du troisième multiplexeur (MUX2, MUX3) et
en ce qu'il est prévu une commande (ST) dont les bus (SB2, SB1) de commande sont guidés aux multiplexeurs (MUX1, MUX2, MUX3) et aux modules (KK1 ... KKn) de raccordement.

5. Multiplexeur de dérivation suivant la revendication 3, caractérisé en ce que le premier multiplexeur (MUX1) et le troisième multiplexeur (MUX3) sont réalisés en portes (G1, G3) et en ce qu'un multiplexeur (MUX4) supplémentaire, par lequel le premier élément (SR1) de temporisation est branché ou supprimé, est branché dans le trajet de signal entre un port (PA2) de sortie et les entrées (E1, E2) des portes (G1, G3).

6. Multiplexeur de dérivation suivant la revendication 3 ou 4, caractérisé en ce que le bus (BE) de réception et le bus (BS) d'émission sont réalisés chacun en bus de données séries ou en bus de données parallèles.
